# EUROPEAN PATENT APPLICATION

(11) **EP 4 006 875 A1**
(43) Date of publication of application: **01.06.2022**
(21) Application number: 20209868.7
(22) Date of filing: 25.11.2020
(51) Int. Cl.: G08G 5/00

(54) **METHOD, DEVIC, CHIP AND SYSTEM FOR CONTROLLING A DEVICE**

(71) Applicant: THALES DIS AIS Deutschland GmbH, 81541 München (DE)
(72) Inventor: BREUER, Volker, 13881 Gémenos Cedex (FR); WEHMEIER, Lars, 13881 Gémenos Cedex (FR); GROENE, Juergen, 13881 Gémenos Cedex (FR); SCHAUERMANN, Vitali, 13881 Gémenos Cedex (FR)
(74) Representative: Grevin, Emmanuel

(57) **Abstract**

A device includes data storing means 104 that stores at least one route image relating to a predetermined first route 301 to be followed to a predetermined first destination 302. Each route image is associated with a geolocation. The device includes a route manager that carries out:
- capturing at least one current location image;
- retrieving at least one route image;
- comparing 210 the at least one current location image to the at least one route image;
- detecting whether the current location image does or does not match the last compared route image;
- identifying 212, only if the current location image matches the last compared route image, the current device location and its associated geolocation;
- identifying 214 a second destination; and
- determining 216 a second route to be followed up to the second destination.

The invention concerns corresponding device, chip and system.

## Description

### Field of the invention:

The invention relates generally to a method for controlling a device.

Moreover, the invention pertains to a device for controlling the device.

The device includes an Unmanned Aerial Vehicle (or UAV) or termed drone.

Moreover, the invention relates to a chip for controlling a device.

The chip may be either an embedded chip, such as an embedded Universal Integrated Circuit Card (or eUICC) or an integrated Universal Integrated Circuit Card (or iUICC), or removable, such as a chip included in a Subscribed Identity Module (or SIM) type card or the like, as a Secure Element (or SE).

Within the present description, an SE is a smart object that, on one hand, protects access to data that the smart object stores and processes and, on another hand, is intended to communicate with an SE host device, like e.g., a UAV, a mobile phone, a Machine to Machine (or M2M) or an Internet of Things (or loT) device.

The invention concerns a system for controlling a device as well. The system includes the device and one or several chips cooperating with the device.

### State of the art:

US 10 185 316 B2 describes a technique that allows controlling, from a control device, through an Internet communication network, a cloud server and one or several cellular communication networks, a UAV.

However, such a technique necessitates keeping a connection to the involved communication networks, so that the control device remotely controls a UAV flight.

There is a need for a solution that allows maintaining a control of the UAV even if the UAV loses notably the connection to the used communication networks.

### Summary of the invention:

The invention proposes a solution for satisfying the just herein above specified need by providing a method for controlling a device.

According to the invention, the device includes data storing means. The data storing means stores at least one route image. The at least one route image is related to a predetermined first route to be followed to a predetermined first destination. Each of the at least one route image is associated with a geolocation. The device includes a route manager. The route manager carries out the following steps of:
- a) capturing, as at least one current location image, at least one image of the current location of the device;
- b) retrieving at least one route image;
- c) comparing the at least one current location image to the at least one route image;
- d) detecting whether the current location image does or does not match the last compared route image;
- e) identifying, only if the current location image matches the last compared route image, the current location of the device and its associated geolocation;
- f) identifying a location, as a second destination; and
- g) determining a second route to be followed, the second route including the second destination.

The principle of the invention consists in that a route manager supported by the device performs:
- collecting, as a current location image, one or several images relating to a current device location;
- getting one or several images relating to a pre-programmed first travel or route to be taken up to a first destination, the route images including, each, a (geographic) location;
- comparing the current location image(s) to at least some of the registered route images;
- determining, only if the current location image matches the last route image, the current device location; and
- determining a second route with a second destination to replace the first route with the first destination.

At an initial state, the device is pre-programmed to aim at a predefined first destination, as a target of a first predefined route.

The target may change in a local, dynamic and autonomous fashion at the device side.

Once the route manager is being executed, the device is re-programmed, locally and off-line, to aim at a second destination, as a second and dynamically defined route target.

Accordingly, the device keeps, on its own, the device control re-routing the device to the target or a newly defined target.

The invention device does not need neither to receive any data originating, trough one or several external networks, such as one or several cellular communication networks, an Internet type communication network and/or a Global Positioning System (or GPS) type localization system, from an external entity(ies), nor to send any data to an external entity(ies).

The invention device does not need to cooperate, through one or several wireless communication networks, with one or several external remote entities.

Within the present description, the adjective "wireless" means that the device communicates, via one or several Long Range (or LR) Radio-Frequency (or RF) links, with one or several communication networks including cellular communication means and GPS type communication means.

The LR RF may be fixed at several hundreds or thousands of MHz, like e.g., around 850, 900, 1228 (GPS), 1575 (GPS), 1800, 1900 and/or2100 MHz.

Due to an automatic, autonomous and local process for piloting or steering the device to the second destination, the invention solution requires no human intervention to keep a device control.

The invention solution is therefore user friendly.

Contrary to the known aforementioned solution, due to a permanent device control, there is no need of any communication network connectivity with the device.

The invention solution allows being, at least temporarily, in a local control of the device.

Such an invention local device control may occur when one or several triggering conditions and/or events are detected.

According to a further aspect, the invention is a device for controlling the device.

According to the invention, the device includes data storing means. The data storing means stores at least one route image. The at least one route image is related to a predetermined first route to be followed to a predetermined first destination. Each of the at least one route image is associated with a geolocation. The device includes a route manager. The route manager is configured to:
- a) capture, as at least one current location image, at least one image of the current location of the device;
- b) retrieve at least one route image;
- c) compare the at least one current location image to the at least one route image;
- d) detect whether the current location image does or does not match the last compared route image;
- e) identify, only if the current location image matches the last compared route image, the current location of the device and its associated geolocation;
- f) identify a location, as a second destination; and
- g) determine a second route to be followed, the second route including the second destination.

The device includes a mobile computing device, like e.g., a UAV, a robot, or a vehicle, such as a motorbike, a car or a truck.

According to a still further aspect, the invention is a chip for controlling a device.

According to the invention, the chip is incorporated or coupled to the device. The chip includes data storing means. The data storing means stores at least one route image. The at least one route image is related to a predetermined first route to be followed to a predetermined first destination. Each of the at least one route image is associated with a geolocation. The chip includes a route manager. The route manager is configured to:
- a) capture, as at least one current location image, at least one image of the current location of the chip;
- b) retrieve at least one route image;
- c) compare the at least one current location image to the at least one route image;
- d) detect whether the current location image does or does not match the last compared route image;
- e) identify, only if the current location image matches the last compared route image, the current location of the chip and its associated geolocation;
- f) identify a location, as a second destination; and
- g) determine a second route to be followed, the second route including the second destination.

The invention does not impose any constraint as to a kind of the chip, as an SE, that may be either embedded, integrated, as a chip soldered, possibly in a removable manner, on a Printed Circuit Board (or PCB) of a (chip host) device, a Trusted Execution Environment (or TEE), as a secure area of a terminal processor and a secured runtime environment, or removable from a (chip host) device.

The SE may thus have different form factors.

As removable from the device, the SE includes a SIM type card, a Secure Removable Module (or SRM), a smart dongle of the USB (acronym for "Universal Serial Bus") type, a (micro-) Secure Digital (or SD) type card or a Multi-Media type Card (or MMC), or any medium that carries the chip to be coupled, through a contact and/or a contact-less link, to an (SE host) device.

The adjective "contact-less" means that the SE and the device that cooperates with the chip are connected to or include means for communicating data while using preferably a Short Range (or SR) RF link. The SR RF link may be related to any technology that allows the SE to exchange data with the device. The SR RF may be fixed at 13,56 MHz and related to a Near Field Communication (or NFC) type technology or the like, as a contact-less technology.

According to a further aspect, the invention is a system for controlling a device. The system includes the device and at least one chip. The at least one chip is incorporated in or coupled to the device. The system includes an aforementioned device or an aforementioned chip.

The device may thus cooperate with a chip to re-route dynamically, i.e. when travelling, the device.

### Brief description of the drawings:

Additional features and advantages of the invention will be more clearly understandable after reading a detailed description of one preferred embodiment of the invention, given as an indicative and non-limitative example, in conjunction with the following drawings:
- Figure 1 represents a simplified diagram of a system including a UAV and a chip cooperating with the UAV, the system being arranged to control, during a UAV travel and off-line, the UAV passing from an initially set route to a dynamically determined route, according to one invention embodiment;
- Figure 2 is an example of a message flow between the UAV and the chip during a movement of the system of figure 1, so that a route manager steers, based on pre-registered route images and a dynamically identified current UAV location, the UAV taking the dynamically determined route, according to one invention embodiment; and
- Figure 3 illustrates an example of a simplified diagram of an environment in which the system moves along the set travel route and is rerouted during the travel, according to the invention.

### Detailed description:

Herein under is considered a case in which the invention method for controlling a device is implemented by a system including the device and at least one chip that cooperates with the device.

The chip is incorporated or embedded, possibly in a removable manner, on a PCB of a device or terminal, as a chip host device.

The chip is preferably included within an SE.

The SE may nevertheless have different form factors.

Instead of being embedded within its host device, the chip/SE may be carried by a medium, such as a smart card or a dongle, like e.g., a USB type dongle, and is communicatively coupled or connected to the host device.

According to another invention embodiment (not represented), the invention method for controlling a device is implemented by the device or a chip on its own. In other words, the device or the chip does not cooperate with any other local entity, such as a chip or the (chip host) device respectively.

Naturally, the herein below described embodiment is only for exemplifying purposes and is not considered to reduce the scope of the invention.

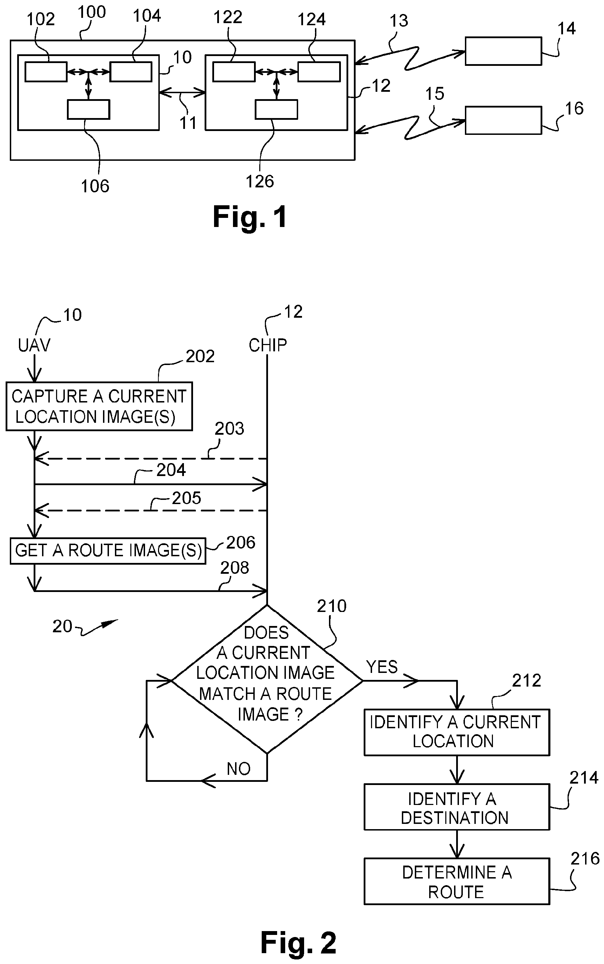

**Figure 1** shows schematically a particular embodiment of a system 100 for controlling a UAV 10, as a device.

The system 100 includes the UAV 10, as a terminal and a chip host device, and an eUICC or an iUICC, as a SIM type chip 12.

Instead of being only a UAV, the device may include a vehicle, a robot, a laptop computer, a media-player, a game console, a tablet, a netbook, a mobile phone, a handset, a Personal Digital Assistance (or PDA), a M2M and/or a loT device.

Such a device set is not exhaustive but only for exemplifying purposes.

The UAV 10, as an aircraft without any human pilot inside, is able to move or fly.

The UAV 10 has a body (not represented).

The UAV body is preferably provided with one or several rotors or propellers (not represented) which allow the UAV 10 to move or fly.

The UAV 10 includes (or is connected to) a flight, move or navigation module (not represented). The flight module allows determining, based on possibly acquired GPS type data, flight data, such as GPS type coordinates or data, like e.g., a latitude, a longitude, an altitude, a flight direction and/or a flight speed. The GPS type data is preferably acquired, through an on-board GPS type sensor(s) (not represented), via a first wireless link 13, by the UAV 10, from a plurality of GPS satellites, as a satellite system 14.

The UAV body carries preferably one or several cameras (not represented), so as to capture one or several images and/or one or several videos from a UAV 10 environment.

The UAV 10 includes (or is connected to) computing means 10 that includes the flight module and that is connected to the camera(s), so as to get such captured data.

The captured data is preferably sent, by the UAV 10, via a second wireless link 15, to or though a remote server 16. The captured data may provide information that is taken into account to remotely pilot or guide the UAV 10 from or through the server 16.

The UAV 10 includes a PCB.

The PCB includes one or several electric motors that is(are) coupled to the rotor(s) and/or the propeller(s), so as to operate the rotor(s) and/or propeller(s).

The PCB comprises the UAV computing means 10, as a flight and wireless module, and the chip 12, as a SIM type module, according to a particular invention embodiment.

The UAV computing means 10 includes one or several (micro)processors with a Central Processing Unit (or CPU), as means 102 for processing data, one or several memories, as means 104 for storing data, and one or several Input/Output (or I/O) interfaces, as means 106 for exchanging data with outside.

The (UAV) data processing means 102, the (UAV) data storing means 104 and the (UAV) data exchanging means 106 are linked all together through a control and data bus.

The data exchanging means 106 allows the CPU to exchange notably with, on one hand, on-board components included in the PCB and, on other hand, possibly through one or several on-board modems, external entities that are wirelessly connected.

The data exchanging means 106 is connected or communicatively coupled, via a bidirectional link 11, to the chip 12.

The data exchanging means 106 includes preferably one or several modems (not represented) that are included in the PCB.

Alternatively or additionally, the chip 12 includes (and/or the chip 12 or the UAV 10 is connected to) one or several modems, as wireless communication means.

The UAV 10, as a wireless module, manages wireless communication functions in cooperation preferably with one or several antennas (not represented) for communicating, Over-The-Air (or OTA), with (an)other external entity(ies).

To carry out such wireless communication functions, the modem(s) provide(s), each, access to one or several wireless communication networks, like e.g., a 3Generation (or 3G), 4G and/or 5G.

Each modem plays a role of a modulator-demodulator, so as to exchange data, through one or several cellular networks, with the server 16 or a remote control device connected to the server 16.

The cellular network(s) may include a Global System for Mobile communications (or GSM), a General Packet Radio Service (or GPRS), a Universal Mobile Telecommunications System (or UMTS), a UTRAN (acronym for "UMTS Terrestrial Radio Access Network"), an EDGE (acronym for "Enhanced Data Rates for GSM Evolution"), a Code Division Multiple Access (or CDMA), a WLAN (acronym for "Wide Local Area Network"), a Long Term Evolution (or LTE), and/or a 5G (also termed NR (acronym for "New Radio")) type network(s).

Such a cellular network set is not exhaustive but only for exemplifying purposes.

The cellular network(s) may be connected, through a bi-directional wire and/or wireless link(s) (not represented), to the Internet type network(s).

The UAV 10 may be piloted, by the server 16 or through the server 16 from another remote entity, such as a mobile phone (not represented). Such a remote piloting implies to remain, during the flight or move, connected, via the cellular network(s), to or through the server 16. When disconnected from the remote control entity, the UAV 10 becomes out-of-control.

The UAV 10 and the chip 12 are preferably both connected wirelessly, via the cellular network(s), through or to the server 16.

The chip 12 is preferably under control of the UAV 10 and/or the server 16.

The chip 12 includes one or several (micro)processors with a CPU, as means 122 for processing data, one or several memories, as means 124 for storing data, and one or several I/O interfaces, as means 126 for exchanging data with outside.

The data processing means 122, the data storing means 124 and the data exchanging means 126 are linked all together through a control and data bus.

The data storing means 124 store(s) preferably (but not mandatorily) one or several Subscriber Identity Module (or SIM) type applications.

The SIM type application(s) includes a SIM application for a Global Service for Mobiles (or GSM) type network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet protocol Multimedia Subsystem (or IMS) Subscriber Identity Module (or ISIM) application.

Such a SIM type application set is not exhaustive.

Each of the SIM type application(s) allow(s) the chip 12 or the UAV 10 to identify and authenticate to one or several cellular networks.

The data storing means 124 and/or the UAV data storing means 104 store(s) one or several route images relating to a preprogrammed or predetermined first route to be taken or followed by the UAV 10.

The data storing means 124 (or the UAV data storing means 104) stores a route manager, as an invention application.

A geographic location or geolocation may be e.g., overprinted on or added, as metadata, to each concerned (registered) route image. The geolocation is readable by the chip 12 (and/or the UAV 10) CPU(s). Each route image is associated with its geolocation.

The first route includes a first destination (location), as a first target.

The chip 12 (or the UAV 10) is able to control, dynamically, i.e. during operation on the first route, in an autonomous and local fashion by executing the route manager, the system 100 and thereby re-route the system 100.

To perform such a local control, the chip 12 and/or the UAV 10 do(es) not need to be wirelessly connected to any communication networks, such as a cellular network(s), a WiFi network(s), a GPS type network(s) and/or other network(s).

The route manager is configured to take or capture, as a current location image(s), one or several pictures or images of the current location of the chip 12/UAV 10. The capture of the current location image(s) is live, when the system 100 operates. The captured current location image(s) is(are) captured preferably by the UAV 10 camera(s), during an operation of the UAV 10 on the first route, from a local environment external to the system 100.

The route manager is arranged to get or retrieve one or several route images. The route images have been previously registered and are stored in the UAV 10 and/or the chip 12, in a local database(s). The route images relate to the previously programmed first route.

The route manager is adapted to compare, e.g., image by image, at least some of the current location image(s) to at least some of the (registered) route images.

The route manager is configured to detect whether the (considered) current location image does or does not match the last compared route image.

If the current location image does not match a first compared route image, then the route manager processes with the next (registered) route image that is considered for such a comparison. The route manager is arranged to identify, only if the (last considered) current location image matches the last compared route image, the current location of the chip 12 (or the UAV 10) and its associated geolocation.

Once the route manager has identified the matching (registered) route image, as a reference route image, the route manager is adapted to read and identify the geolocation that is associated with the reference route image.

The route manager is configured to identify a location, as a second destination (location), analysing the route image(s) captured by the camera(s) and the route image(s) registered for the first route.

The route manager is adapted to determine dynamically a second route to be followed or taken (by the system 100). The (generated) second route includes the second destination.

The route manager allows taking the control of the UAV 10 to guide, when travelling, the UAV 10 towards the second destination.

**Figure 2** depicts an exemplary embodiment of a message flow 20 that involves the UAV 10 and the chip 12.

In the described method embodiment, it is assumed that only the UAV 10 accesses the on-board camera(s) to capture data relating to a local environment.

It is further assumed that only the UAV 10 accesses one or several route images relating to the pre-programmed first route to be followed to the first destination.

It is still assumed that the system 100 is travelling and is taking the first route to the first destination.

Prior to activating the route manager, the chip 12 may detect one or several predefined triggering conditions or events (not represented).

The chip 12 (more exactly, the chip 12 CPU) executes the route manager.

The UAV 10 captures 202 preferably in a periodic manner, using one or several cameras, one or several pictures or images of its current location in its local and exterior environment.

Optionally, the chip 12 sends 203, to the UAV 10, a request for taking or capturing one or several images of a current location of the chip 12/the UAV 10 in its local and exterior environment.

The UAV 10 sends 204, to the chip 12, the captured image(s) of the current location of the UAV 10.

Optionally, the chip 12 sends 205, to the UAV 10, a request for retrieving one or several images relating to the first route and that have been previously registered in the UAV 10.

The UAV 10 reads or gets 206, from its memory(ies), one or several route images. Each route image is associated with an associated geolocation.

The UAV 10 sends 208, to the chip 12, the route image(s).

The chip 12 compares 210, preferably image by image, the (received and captured) current location image(s) to the (received and retrieved) route image(s).

While the (considered) current location image does not match the last (considered) route image, the route manager processes or considers the next (registered) route image to be compared to the current location image. Once all the route images have been parsed, the route manager considers the next current location image and re-processes by comparing to the first considered route image and so on, when applicable.

The chip 12 identifies 212, only if the (last considered) current location image matches the last compared route image, the current location of the system 100 and its associated geolocation.

The chip 12 identifies 214 a location, as a second destination.

The chip 12 then determines 216 a second route to be followed or taken by the chip 12/the UAV 10. The (determined) second route includes the (identified) second destination.

To determine the second route, the chip 12 carries out one or several functions among the following ones:
- generate dynamically the second route to be followed;
- select dynamically, in the data storing means 124 and/or the data storing means 104, among one or several (registered) derivation routes, a derivation route, as the second route to be followed;
- detect dynamically, using one or several cameras, one or several geographical remarkable points included in the captured image(s) that may be used as a second destination (location); and
- detect dynamically, one or several acoustic signals originating from external means for guiding the chip 12/the UAV 10 to the second destination along a second route to be followed.

To select dynamically a derivation route, there is preferably, for each location included in the first route, an indication or an identification of one or several routings that may be selected.

The chip 12 controls thus the UAV 10 by guiding the system 100 along the dynamically determined second route to the dynamically identified second destination.

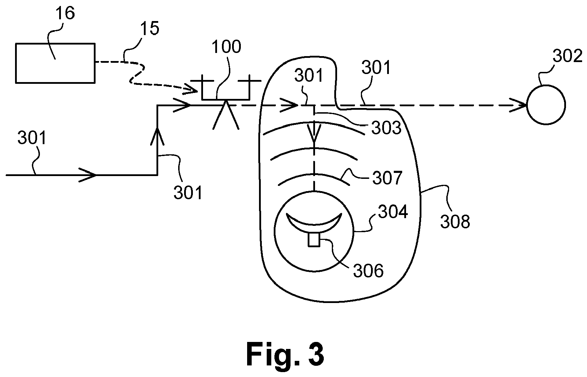

**Figure 3** shows, in 2Dimension (or 2D), a simplified environment 300 including the system 100 and two landing areas 302 and 304.

The system 100 follows a first route 301. The first route 301 is defined preferably, so as to avoid an area (not represented)that is not authorized to be hovered over.

The first route 301 includes a first landing area 302, as a first destination.

The first destination 302 constitutes an initial target.

While the system 100 moves towards the first destination 302, the chip 12 (and/or the UAV 10) detects preferably, as a predefined triggering event, an interruption of a reception of incoming data 15 that originates from the server 16 or through the server 16, from e.g., a mobile phone, as a remote UAV controlling entity (not represented). The incoming data 15 allows controlling remotely the system 100.

Alternatively or additionally, the predefined triggering event(s) include(s) a detection, by the chip 12 (and/or the UAV 10), of:
- an interruption of a reception of an acknowledgement of receipt of outgoing data transmitted, by the chip 12 and/or the UAV 10, to a remote UAV controlling entity;
- an interruption of a reception of a current GPS type location originating from one or several satellites;
- one or several threats, such as a detection, through data captured by the camera(s), of one or several lightning flashes or other bad weather conditions that may be dangerous for the system 100 for its travel;
- a lack of sufficient energy to reach the first destination, the energy being provided to operate the system 100;
- one or several failures; and/or
- one or several jamming signals.

Such a triggering event set is not exhaustive.

Once the chip 12 has detected one or several triggering events, the chip 12 activates and executes the route manager.

The chip 12 captures one or several images of the current location of the chip12/the UAV 10. Each of the current location image includes one or several local geolocation features.

The chip 12 retrieves one or several (locally, i.e. in the chip 12 (and/or the UAV 10) memory(ies)) registered images relating to the first route 301. Each of the route 301 images includes one or several geolocation features.

The geolocation feature(s) include(s) one or several landscape features, one or several town features, one or several building features, one or several house features, one or several electricity pole features, one or several wind wheel features, one or several bridge features, one or several road features, one or several crossroad features, one or several hill features, one or several mountain features, one or several tree features, one or several sea features, one or several lake features, one or several river features, one or several island features, one or several sounding balloon features, one or several star features, one or several planet features, one or several satellite features, one or several landmark features, one or several edge features, one or several light constellation features and/or any remarkable environment feature.

The chip 12 compares, preferably image by image, the current location images to the route 301 images.

To compare the current location image to the route 301 image, the chip 12 compares the geolocation feature(s) included in the considered route image to the local geolocation feature(s) included in the considered current location image.

To detect whether the current location image does or does not match the last compared route image, the chip 12 detects whether the geolocation feature(s) included in the last compared route image does or does not match, at least in part, the local geolocation feature(s) included in the current location image.

To identify the current system 100 location and its associated geolocation, the chip 12 identifies, only if the geolocation feature(s) included in the last compared route image matches at least in part the local geolocation feature(s) included in the current location image, the current location of the system 100 and its associated geolocation.

The chip 12 identifies dynamically, i.e. during operation and along the first route 301, a second destination (location) 304.

The server 16 may have estimated and anticipated, based on the last known location of the UAV 10 (further to its disconnection from the server 16), the second destination 304 that is or should be identified by the chip 12 (or the UAV 10). The server 16 may send an alert signal(s) to a robot, a boat, a vehicle, a person and/or people, so as to pick-up the UAV 10 and its possible transported baggage(s).

The server 16 may further activate means for emitting one or several acoustic signals 307 towards the UAV 10 while possibly providing the last known UAV location or a UAV location estimation.

The second destination 304 may be identified either on a registered route image that either belongs to the first route 301 or is close to the first route 301, or on a deviation route image that has to be live captured by the camera(s).

The second destination 304 includes an emergency station, a safe station, a landing station, a take-off station, an initial take-off station included in the first route, a stop station, a battery change station, an energy providing station, a service station, a repairing station and/or a UAV protection station.

Such a second destination set is not exhaustive.

The second destination 304 is preferably dependent on the current location image, i.e. on the associated current (identified) geolocation.

The second destination 304 may be changed or updated dynamically, i.e. when travelling.

The second destination 304 is e.g., separate from the first destination 302. Alternately, the second destination 304 constitutes the first destination 302.

The chip 12 determines a second route 308 to fly or move to the second destination 304.

To determine the second route 308, the chip 12 generates a partly deviated route that deviates in part from the first route 301 by following firstly e.g., the first route 301 and secondly e.g., deviating from the first 301 once the chip 12 detects one or several acoustic signals 307 originating from external means 306. The second destination 304 is preferably provided with the means 306 for emitting acoustic signal(s) that allow(s) guiding the UAV 10 up to the second destination 304.

The second route 308 is preferably, at least in part, distinct from the first route 301.

The second route 308 may constitute an alternative route to the first route 301 when the second destination 304 constitutes the first destination 302.

The second route 308 includes e.g. a part of the first route 301 and a deviation route 303.

The second route 308 is preferably deprived of any unauthorized passage portion and deprived of any private passage portion.

The second route 308 includes preferably one or several authorized passage portions, one or several portions that are marked on a ground or a roof and that allow guiding through the on-board camera(s) the UAV 10, one or several portions that are only accessible from an air flight, one or several portions with an authorized speed limit and/or one or several sequences of images to be captured, as one or several next location images, the image sequence(s) to be captured being stored in the data storing means of the UAV 10 (and/or the chip 12).

The second route 308 includes the second destination 304, as the newly dynamically defined target.

The second destination 304 may be provided with means for communicating with the server 16.

Once the UAV 10 has reached the second destination 304, the second destination 304 may advise the server 16 about the UAV 10 arrival.

The invention solution is automatically executed.

The invention solution allows providing continuity of control of the device when travelling including a loss of wireless connection to a remote control device.

The invention solution allows securing its operation and therefore preventing a loss of the device.

The embodiment that has just been described is not intended to limit the scope of the concerned invention. Other embodiments may be given. As another embodiment example, instead of being supported by a chip that cooperates with a UAV, as the device, the route manager is supported by the UAV, as the device itself.

## Claims

1. A method (20) for controlling a device (10), the device including data storing means (104), the data storing means storing at least one route image, the at least one route image being related to a predetermined first route (301) to be followed to a predetermined first destination (302), each of the at least one route image being associated with a geolocation, the device including a route manager, the route manager carries out the following steps of:
- a) capturing, as at least one current location image, at least one image of the current location of the device;
- b) retrieving at least one route image;
- c) comparing (210) the at least one current location image to the at least one route image;
- d) detecting whether the current location image does or does not match the last compared route image;
- e) identifying (212), only if the current location image matches the last compared route image, the current location of the device and its associated geolocation;
- f) identifying (214) a location, as a second destination (304); and
- g) determining (216) a second route (308) to be followed, the second route including the second destination.

2. Method according to claim 1, wherein the second destination is separate from the first destination.

3. Method according to any previous claim, wherein, prior to executing the route manager, the device detects at least one predetermined triggering event.

4. Method according to claim 3, wherein the at least one triggering event includes at least one element of a group including:
- an interruption of a reception of incoming data, the incoming data originating from or through a remote server;
- an interruption of a reception of an acknowledgement of receipt of outgoing data, the outgoing data being transmitted by the device to a remote device controlling entity;
- an interruption of a reception of a current GPS type location originating from at least one satellite;
- a lack of sufficient energy to reach the first destination, the energy being provided to operate the device;
- at least one failure;
- at least one threat;
- at least one jamming signal.

5. Method according to any previous claim, wherein, each of the at least one route image including at least one geolocation feature, each of the at least one current location image including at least one local geolocation feature, the comparison step c) includes comparing the at least one geolocation feature included in the route image to the at least one local geolocation feature included in the current location image, the detection step d) includes detecting whether the at least one geolocation feature included in the last compared route image does or does not match at least in part the at least one local geolocation feature included in the current location image and the identification step e) includes identifying, only if the at least one geolocation feature included in the last compared route image matches at least in part the at least one local geolocation feature included in the current location image, the current location of the device and its associated geolocation.

6. Method according to any previous claim, wherein the at least one geolocation feature includes at least one element of a group including:
- at least one landscape feature;
- at least one town feature;
- at least one building feature;
- at least one house feature;
- at least one electricity pole feature;
- at least one wind wheel feature;
- at least one bridge feature;
- at least one road feature;
- at least one crossroad feature;
- at least one hill feature;
- at least one mountain feature;
- at least one tree feature;
- at least one sea feature;
- at least one lake feature;
- at least one river feature;
- at least one island feature;
- at least one sounding balloon feature;
- at least one star feature;
- at least one planet feature;
- at least one satellite feature;
- at least one landmark feature;
- at least one edge feature;
- at least one light constellation feature.

7. Method according to any previous claim, wherein the second destination includes at least one element of a group including:
- an emergency station;
- a safe station;
- a landing station;
- a take-off station;
- an initial take-off station included in the first route;
- a stop station;
- a battery change station;
- an energy providing station;
- a service station;
- a repairing station;
- a device protection station.

8. Method according to any previous claim, wherein the step g) of determining a second route to be followed includes at least one element of a group including:
- generating dynamically, by the device, the second route to be followed;
- retrieving dynamically, by the device, in the data storing means, among at least one derivation route, a derivation route, as the second route to be followed;
- detecting dynamically, by the device, using at least one camera, at least one geographical remarkable point included in at least one captured image and a location that may be used as a second destination; and
- detecting dynamically, by the device, at least one acoustic signal originating from external means for guiding the device to the second destination.

9. Method according to any previous claim, wherein the second route includes at least one feature of a group including:
- deprived of any unauthorized passage portion;
- deprived of any private passage portion;
- at least one authorized passage portion;
- at least one portion that is marked on a ground or a roof;
- at least one portion that is only accessible from an air flight;
- at least one portion with an authorized speed limit;
- at least one sequence of at least one image to be captured, as at least one next location image, the at least one sequence of at least one image to be captured being stored in the data storing means.

10. A device (10) for controlling the device, the device including data storing means (104), the data storing means storing at least one route image, the at least one route image being related to a predetermined first route (301) to be followed to a predetermined first destination (302), each of the at least one route image being associated with a geolocation, the device including a route manager, the route manager is configured to:
- a) capture, as at least one current location image, at least one image of the current location of the device;
- b) retrieve at least one route image;
- c) compare the at least one current location image to the at least one route image;
- d) detect whether the current location image does or does not match the last compared route image;
- e) identify, only if the current location image matches the last compared route image, the current location of the device and its associated geolocation;
- f) identify a location, as a second destination (304); and
- g) determine a second route (308) to be followed, the second route including the second destination.

11. A chip (12) for controlling a device, the chip being incorporated or coupled to the device, the chip including data storing means (124), the data storing means storing at least one route image, the at least one route image being related to a predetermined first route (301) to be followed to a predetermined first destination (302), each of the at least one route image being associated with a geolocation, the chip including a route manager, the route manager is configured to:
- a) capture, as at least one current location image, at least one image of the current location of the chip;
- b) retrieve at least one route image;
- c) compare the at least one current location image to the at least one route image;
- d) detect whether the current location image does or does not match the last compared route image;
- e) identify, only if the current location image matches the last compared route image, the current location of the chip and its associated geolocation;
- f) identify a location, as a second destination (304); and
- g) determine a second route (308) to be followed, the second route including the second destination.

12. A system (100) for controlling a device (10), the system including the device and at least one chip (12), the at least one chip being incorporated or coupled to the device, the system includes a device according to claim 10 or a chip according to claim 11.
